# EUROPÄISCHE PATENTANMELDUNG

(11) **EP 1 911 609 A2**
(43) Veröffentlichungstag der Anmeldung: **16.04.2008**
(21) Anmeldenummer: 07018194.6
(22) Anmeldetag: 17.09.2007
(51) Int. Cl.: B60C 23/00

(54) **Verfahren und Vorrichtung zur Anpassung von Reifen eines Fortbewegungsmittels an gegebene Fahrsituation**

(30) Priorität: 12.10.2006 DE 102006048769
(71) Anmelder: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(57) **Zusammenfassung**

Die Erfindung betrifft ein Verfahren zur Anpassung von Reifen (14) eines insbesondere motorgetriebenen Fortbewegungsmittel an gegebene Fahrsituationen, insbesondere eines PKWs, eines Lastkraftwagens oder dergleichen. Die Form zumindest eines Reifens (14), bevorzugt mehrerer oder sämtlicher Reifen (14), wird während der Fahrt abhängig von der Fahrsituation gezielt und vorzugsweise automatisch verändert.

## Beschreibung

Die vorliegende Erfindung betrifft ein Verfahren zur Anpassung von Reifen eines insbesondere motorgetriebenen Fortbewegungsmittels an gegebene Fahrsituationen, insbesondere eines PKWs, eines Lastkraftwagens, eines Flugzeugs oder dergleichen. Die vorliegende Erfindung betrifft des Weiteren ein Fortbewegungsmittel mit zumindest einem abhängig von der Fahrsituation verformbaren Reifen zur Durchführung des vorgenannten Verfahrens.

An Reifen von Fortbewegungsmitteln, wie etwa PKWs, Lastkraftwagen, Motorräder, Flugzeuge oder dergleichen werden je nach Fahrsituation unterschiedliche Anforderungen gestellt. Bei Brems- und Beschleunigüngsvorgängen ist es grundsätzlich vorteilhaft, die Aufstandsfläche des Reifens, das heißt, die Kontaktfläche des Reifens mit dem jeweiligen Untergrund, möglichst groß zu gestalten, um eine hohe Reibung zu erzielen. Bei Geradeausfahrten ohne derartige Brems- oder Beschleunigungsvorgänge wäre dagegen eine besonders kleine Reifen-Aufstandsfläche mit möglichst geringem Reibungswiderstand vorteilhaft. Bei Kurvenfahrten ist wiederum eine möglichst große Reifen-Aufstandsfläche mit möglichst großer Reibung vorteilhaft, um Querbeschleunigungen verursachende Querkräfte kompensieren zu können.

Reifen des Standes der Technik stellen Kompromisse dar, die versuchen, die vorgenannten gegensätzlichen Bedingungen möglichst gut zu erfüllen. Um eine möglichst gute Kompensation von Längs- und Querbeschleunigungskräften zu bewirken, werden tendenziell Reifen mit breiterer Lauffläche, und somit großer Reifen-Aufstandsfläche eingesetzt. Wenn Reifen mit schmalerer Lauffläche verwendet werden, wird entsprechend auf einen möglichst reibungsreduzierten Geradeauslauf Wert gelegt.

Motorradreifen weisen eine spezielle Reifenkontur auf, die versucht, die unterschiedlichen Anforderungen während des Geradeauslaufs einerseits und während des Kurvenlaufs andererseits abzubilden. Die Kontur ist so ausgelegt, dass sich die Reifen-Aufstandsfläche und somit die Haftfähigkeit des Reifens mit zunehmender Schräglage des Motorrads erhöht. Nicht angepasst sind derartige Motorradreifen allerdings an unterschiedliche Fahrsituationen während des Geradeauslaufs. Unabhängig davon, ob die Reifen einerseits gebremst oder beschleunigt werden oder andererseits ungebremst geradeaus laufen, ist immer dieselbe Reifen-Aufstandsfläche wirksam. Dies führt zu immer gleichen Reibungsverhältnissen, unabhängig davon, ob die Reifen beschleunigt oder abgebremst werden.

Ausgehend von diesem Stand der Technik ist es Aufgabe der vorliegenden Erfindung, ein Verfahren anzugeben, mit dem die Reifen eines insbesondere motorgetriebenen Fortbewegungsmittels, insbesondere eines PKWs, eines Lastkraftwagens, eines Motorrades, eines Flugzeuges oder dergleichen, an verschiedenste Fahrsituationen angepasst werden können. Des Weiteren ist es Aufgabe der vorliegenden Erfindung, ein Fortbewegungsmittel anzugeben, das mit einem derartigen Verfahren zur fahrsituationsabhängigen Anpassung der Reifen betrieben wird.

Diese Aufgabe wird gelöst durch ein Verfahren mit den Merkmalen des Anspruches 1 sowie ein Fortbewegungsmittel mit den Merkmalen des Anspruches 9.

Dementsprechend wird erfindungsgemäß ein Verfahren zur Anpassung von Reifen eines insbesondere motorgetriebenen Fortbewegungsmittels an gegebene Fahrsituationen angegeben, das dadurch gekennzeichnet ist, dass die Form zumindest eines Reifens, bevorzugt mehrerer oder sämtlicher Reifen, während der Fahrt des Fortbewegungsmittels abhängig von der Fahrsituation gezielt und vorzugsweise automatisch verändert wird.

Unter Fortbewegungsmittel wird im Rahmen der Anmeldung jedes mit oder ohne Motor angetriebene Fortbewegungsmittel bezeichnet, insbesondere Fahrzeuge, wie etwa PKWs, Lastkraftwagen, Motorräder, Fahrräder oder dergleichen. Grundsätzlich ist es denkbar, auch Reifen von Flugzeugen mit dem erfindungsgemäßen Verfahren an gegebene Fahrsituationen, anzupassen, etwa während Start- oder Landevorgängen.

Die Form des Reifens wird dabei erfindungsgemäß vorzugsweise derart verändert, dass die während der Fahrt wirksame Reifen-Aufstandsfläche je nach Fahrsituation vergrößert oder verkleinert wird. Die Veränderung der Reifenform macht sich üblicherweise besonders in der Veränderung der Reifenkontur in Querschnittsansicht bemerkbar.

In einer bevorzugten Ausführungsform der Erfindung sind dem Reifen, besonders bevorzugt den Reifenwandungen, zur Veränderung der Reifenform insbesondere elektronisch steuer- und/oder regelbare Formveränderungsmittel zugeordnet. Die steuerbaren und/oder regelbaren Formveränderungsmittel werden abhängig von der Fahrsituation angesteuert bzw. geregelt.

In einer Alternative kann mittels der Formveränderungsmittel der Luft- bzw. Gasdruck innerhalb des Reifens abhängig von der Fahrsituation - vorzugsweise automatisch - erhöht oder erniedrigt werden. Beispielsweise bei den üblichen Auto-Reifen kann demnach der Luftdruck in dem durch Reifen und Felge begrenzten Raum erhöht oder erniedrigt werden. Bei Reifen mit Luft- oder Gas gefülltem Schlauch wird entsprechend der Luft- bzw. Gasdruck innerhalb des Schlauchs erhöht bzw. erniedrigt. Bei Reifen, die eine Mehrzahl von Luft-/Gas gefüllten Kammern aufweisen, wird der Druck innerhalb dieser Kammern erhöht oder erniedrigt.

Um den Reifendruck abhängig von der Fahrsituation zu verändern, weisen die Formveränderungsmittel eine über ein geeignetes Leitungssystem mit dem Reifen verbundene/verbindbare Druckluft- bzw. Druckgasquelle auf. Die Druckluft- bzw. Druckgasquelle kann im Inneren des Fortbewegungsmittels angeordnet sein, bspw. im Motorraum. Wenn der Reifendruck erhöht werden soll, wird dem Reifen Luft/Gas aus der Druckluft-/Druckgasquelle zugeführt. Wenn der Reifendruck erniedrigt werden soll, wird automatisch ein geeignetes Reifenventil geöffnet, über dass Luft/Gas aus dem Reifen entweichen kann.

Wie der Fachmann erkennt, sind für die detaillierte Ausbildung der Formveränderungsmittel vielfältige Möglichkeiten denkbar.

Die oben beschriebene Luft- bzw. Gasdruckerhöhung führt beispielsweise in einem PKW-Reifen dazu, dass sich die Lauffläche des Reifens so verformt, insbesondere wölbt, dass die wirksame Reifen-Aufstandsfläche reduziert wird.

In einer weiteren Ausführungsform der Erfindung weisen die insbesondere elektronisch steuer- und/oder regelbaren Formveränderungsmittel auf den Reifen einwirkende Zugmittel auf. Diese können abhängig von der Fahrsituation Zugkräfte bewirken, durch die die Seitenwandungen des jeweiligen Reifens aufeinander zu bewegt werden. Die Bewegung der Reifenwandungen soll derart erfolgen, dass die wirksame Reifen-Aufstandsfläche reduziert wird. In ähnlicher Weise wie bei der oben dargestellten Luftdruckerhöhung innerhalb des Reifens wird durch die Zugmittel die Lauffläche des Reifens nach außen gewölbt.

Es kann weiter vorgesehen sein, dass die Formveränderungsmittel den Reifen zugeordnete, elektroaktive Polymerstränge aufweisen, die bevorzugt in die Reifenwandung integriert sind. Die elektroaktiven Polymerstränge können sich bei Anlegen geeigneter elektrischer Spannungen zusammenziehen bzw. ausdehnen. Sie werden derart in die Reifenwandung integriert, dass die Aktivierung und/oder Deaktivierung der Polymerstränge zu der gewünschten Formveränderung der Reifen führt.

Erfindungsgemäß ist bevorzugt weiter vorgesehen, die Form des Reifens so zu verändern, dass die wirksame Reifen-Aufstandsfläche bei ungebremsten oder unbeschleunigten Geradeausfahrten des Fortbewegungsmittels kleiner ist als bei Kurvenfahrten und/oder kleiner als bei Brems- oder Beschleunigungsvorgängen. Dadurch wird während der Geradeausfahrten die Reibung zwischen Reifen und Fahrbahn reduziert. Bei Kurvenfahrten und/oder bei Brems- oder Beschleunigungsvorgängen wird dagegen die Reibung zwischen Reifen und Fahrbahn erhöht, um die auf den Reifen einwirkenden Kräfte, insbesondere Längs- bzw. Querkräfte, möglichst gut kompensieren zu können.

Die Veränderung der Form des Reifens kann in einer besonders vorteilhaften Ausführungsform der Erfindung abhängig von Brems- und/oder Beschleunigungsvorgängen des Fortbewegungsmittels erfolgen und/oder abhängig von Lenkvorgängen. Beispielsweise bei einem PKW, aber auch bei anderen Fortbewegungsmittels kann die Veränderung des Reifens daher abhängig sein von der Betätigung einer Beschleunigungseinrichtung des Fortbewegungsmittels, etwa mittels eines Gaspedals, und/oder einer Bremseinrichtung und/oder einer Lenkeinrichtung zur Lenkung des Reifens.

In einer weiteren Ausführungsform der Erfindung wird die Ist-Fahrsituation, in der sich das Fortbewegungsmittel befindet, mittels geeigneter Sensoren erfasst. Abhängig von mittels der Sensoren gemessenen Messwerten, die die Ist-Fahrsituation charakterisieren, wird dann die Form des Reifens angepasst.

Als Sensoren können beispielsweise dem Fortbewegungsmittel zugeordnete Beschleunigungssensoren eingesetzt werden, die Beschleunigungsvorgänge und/oder Bremsvorgänge und/oder unbeschleunigte Fahrbewegungen des Fortbewegungsmittels registrieren können. Denkbar ist des Weiteren alternativ oder zusätzlich eine Erfassung der Fahrbahn, auf der sich das Fortbewegungsmittel befindet. Dabei kann bevorzugt die Fahrbahnbeschaffenheit erfasst werden. Diese Fahrbahnerfassung kann im Vorfeld des Fortbewegungsmittels erfolgen, etwa durch Kameras oder andere geeignete Sensoren.

Wie der Fachmann des Standes der Technik erkennt, gibt es eine Vielzahl von Möglichkeiten der direkten oder indirekten Erfassung der Ist-Fahrsituation.

Weiter kann vorgesehen werden, die Formveränderungsmittel abhängig von von einem Abstandswarner erzeugten Signalen zu steuern und/oder zu regeln. Beispielsweise kann bei einem gemessenen Abstand des Fortbewegungsmittels zu einem Hindernis, etwa einem vor dem Fortbewegungsmittel fahrenden weiteren Fortbewegungsmittels, der geringer oder gleich einem vorbestimmten Minimalwert ist, die Form des Reifens verändert werden. Bevorzugt wird in diesem Fall die Reifen-Aufstandsfläche automatisch vergrößert, um bei einem möglichen, bevorstehenden Bremsvorgang ausreichend Reibungsfläche zur Verfügung zu stellen. Wenn sich der Abstand zu dem Hindernis anschließend wieder vergrößert, kann die Reifenaufstandsfläche wieder verringert werden.

Das erfindungsgemäße Verfahren zur Anpassung eines Reifens kann auf verschiedene Weise in ein entsprechendes Fortbewegungsmittel integriert werden. Wichtig ist, dass das Fortbewegungsmittel eine Steuerungs- und/oder Regelungseinrichtung aufweist, mittels derer die Form des Reifens, vorzugsweise automatisch, an die Fahrsituation anpassbar ist.

Eine geeignete Steuerungs- und/oder Regelungseinrichtung kann in einer einfachen Variante eine Bedienungseinrichtung aufweisen, die während der Fahrt von einem Benutzer betätigbar ist. Mit einer derartigen Bedienungseinrichtung könnte der Benutzer jeweils individuell abhängig von der Fahrsituation die oben beschriebenen Formveränderungsmittel steuern, die dann die Form des Reifens verändern.

Besonders bevorzugt wird allerdings eine Steuerungs- und/oder Regelungseinrichtung, mit der die Form des Reifens automatisch an die Fahrsituation anpassbar ist.

Schließlich können dem Reifen zur Versorgung eines oder mehrerer Bauteile der Formveränderungsmittel und/oder der Steuerungs- und/oder Regelungseinrichtung mit elektrischer Energie auf Induktionswirkung beruhende Energieerzeugungsmittel zugeordnet sein. Die Energieerzeugungsmittel sollen dabei die Rotationsenergie der Reifen während der Fahrt des Fortbewegungsmittel zur Energieerzeugung nutzen, etwa mithilfe einer relativ zu einem Magneten rotierenden Spule. Beispielsweise können in dem Reifen ein oder mehrere elektrische Leiter, etwa elektrisch leitfähige Schleifen, angeordnet sein, die bei Rotation des Reifens relativ zu in Radkästen des Fortbewegungsmittels angeordneten Magneten rotieren. Durch die Relativbewegung zwischen elektrischem Leiter und Magnet kann in bekannter Weise elektrische Energie erzeugt werden.

Weitere Merkmale der vorliegenden Erfindung ergeben sich aus den beigefügten Unteransprüchen, der nachfolgenden Beschreibung eines bevorzugten Ausführungsbeispieles sowie der beiliegenden Zeichnung. Darin zeigt:

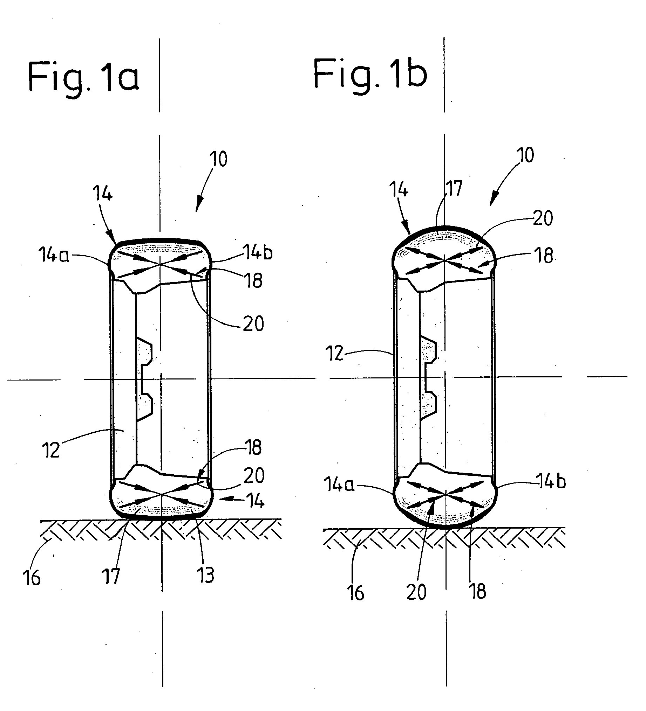

- Fig. 1 a: ein Rad eines Fortbewegungsmittels mit erfindungsgemäß anpassbarem Reifen in Querschnittsansicht.
- Fig. 1b: den Reifen aus Fig. 1 a mit an eine veränderte Fahrsituation angepasster Reifenform.

Fig. 1 a zeigt eine Querschnittsansicht eines Rades 10 eines nicht dargestellten Fortbewegungsmittels, nämlich eines PKWs. Das Rad 10 weist eine Felge 12 auf sowie einen in üblicher Weise mit der Felge 12 verbundenen Reifen 14.

Der Reifen 14 ist mit Luft gefüllt. Wie aus der Fig. 1a zu erkennen ist, befindet sich ein Teilabschnitt 13 des Reifens 14 nahezu vollständig in Kontakt mit der Oberfläche einer Fahrbahn 16, auf der das Fortbewegungsmittel fahren kann. Der Teilabschnitt 13 des Reifens 14 weist üblicher Weise eine Profilierung 17 auf und wird auch als Lauffläche bezeichnet. Bei Reifen des Standes der Technik liegt ein Großteil der Lauffläche 13 häufig in nahezu jeder Fahrsituation auf der Fahrbahn 16 auf.

Unabhängig von der fest definierten Lauffläche 13 des Reifens 14 kann in extremen Fahrsituationen allerdings grundsätzlich auch nur ein Teil der Lauffläche 13 oder ein von der Lauffläche 13 verschiedener Bereich des Reifens 14 effektiv auf der Fahrbahn 16 aufliegen. Derjenige Teil des Reifens 14 oder der Lauffläche 13, der in der jeweiligen Fahrsituation tatsächlich mit der Fahrbahn 16 in Kontakt tritt, wird mit Reifen-Aufstandsfläche bezeichnet. Die effektiv bzw. tatsächlich wirksame Reifen-Aufstandsfläche kann kleiner oder größer sein als die Lauffläche 13, dieser entsprechen oder auch von dieser abweichen.

Innerhalb des Reifens 14 sind Formveränderungsmittel 18 angeordnet, die dazu dienen, die Form des Reifens 14, insbesondere dessen Kontur, gezielt zu verändern. Die Formveränderungsmittel 18 sind nur schematisch dargestellt. Sie weisen Zugmittel 20 auf, mittels derer die seitlichen Reifenwandungen 14a und 14b aufeinander zu bewegt werden können. Dazu greifen die Zugmittel 20 mit ihren jeweiligen Enden an den Seitenwandungen 14a, 14b an.

In der in Fig. 1a dargestellten Situation sind die Formveränderungsmittel 18 so eingestellt, dass sich eine besonders große Reifen-Aufstandsfläche ergibt. Die gesamte Lauffläche 13 des Reifens 14 tritt mit der Fahrbahn 16 in Kontakt. Dies führt zu hoher Reibung zwischen Reifen 14 und Fahrbahn 16. Eine derart hohe Reibung ist üblicher Weise gewünscht bei Beschleunigungs- oder Abbremsvorgängen des PKWs. Weiter ist eine derart große Reifen-Aufstandsfläche bei Kurvenfahrten vorteilhaft.

Fig. 1 b zeigt dagegen den Reifen 14 in einem Zustand, in dem die Seitenwandungen 14a, 14b mittels der Formveränderungsmittel 18 aufeinander zu bewegt worden sind. Wie gut zu erkennen ist, wölbt sich dadurch die Lauffläche 13 des Reifens 14 aus, so dass sich eine gegenüber der Situation aus Fig. 1 a deutlich verringerte Reifen-Aufstandsfläche ergibt. Nur ein Teil der Lauffläche 13 hat Kontakt zur Fahrbahn 16. Dies führt zu einer deutlich verringerten Reibung, die beispielsweise bei hohen Geschwindigkeiten ohne Brems- oder Beschleunigungsvorgänge gewünscht sein kann.

In einer Weiterbildung der Erfindung sind diejenigen äußeren Bereiche der Lauffläche 13, die vornehmlich bei Brems- und/oder Beschleunigungsvorgängen und/oder während Kurvenfahrten mit der Fahrbahn 16 in Kontakt kommen, aus einem anderen Material mit relativ zur Fahrbahn geringeren Reibungswert ausgebildet als die inneren Bereiche der Lauffläche 13, die auch während des unbeschleunigten bzw. ungebremsten Geradeauslaufs mit der Fahrbahn 16 in Kontakt kommen. Alternativ oder zusätzlich können die äußeren Laufflächenbereiche auch eine andere Profilierung aufweisen als die inneren Laufflächenbereiche.

In einer von vielen möglichen Ausführungsformen der Erfindung erkennt eine dem Fortbewegungsmittel, das heißt dem PKW, zugeordnete Sensoreinrichtung die jeweilige Fahrsituation. Abhängig von den ermittelten Messwerten werden die Formveränderungsmittel 18 mittels geeigneter Steuerungs- und/oder Regelungseinrichtungen gesteuert und/oder geregelt.

Es kann aber auch vorgesehen sein, die Formveränderungsmittel 18 unmittelbar abhängig von von einem Benutzer durchgeführten Lenkbewegungen der Räder 10 oder abhängig von von dem Benutzer eingeleiteten Brems- oder Beschleunigungsvorgängen zu steuern bzw. zu regeln.

Wie der Fachmann des Standes der Technik erkennt, sind hier vielfältige Möglichkeiten denkbar.

### Bezugszeichenliste:

- 10: Rad
- 12: Felge
- 13: Lauffläche
- 14: Reifen
- 14a: seitliche Reifenwandung
- 14b: seitliche Reifenwandung
- 16: Fahrbahn
- 17: Profilierung
- 18: Formveränderungsmittel
- 20: Zugmittel

## Patentansprüche

1. Verfahren zur Anpassung von Reifen eines insbesondere motorgetriebenen Fortbewegungsmittel an gegebene Fahrsituationen, insbesondere eines PKWs, eines Lastkraftwagens, eines Flugzeugs oder dergleichen, **dadurch gekennzeichnet, dass** die Form zumindest eines Reifens (14), bevorzugt mehrerer oder sämtlicher Reifen (14), während der Fahrt abhängig von der Fahrsituation gezielt und vorzugsweise automatisch verändert wird.

2. Verfahren gemäß Anspruch 1, **dadurch gekennzeichnet, dass** die Form des Reifens (14) derart verändert wird, dass die während der Fahrt wirksame Reifen-Aufstandsfläche je nach Fahrsituation vergrößert oder verkleinert wird.

3. Verfahren gemäß Anspruch 1 oder 2, **dadurch gekennzeichnet, dass** die Form des Reifens (14) verändert wird, indem dem Reifen (14), bevorzugt den Reifenwandungen (14a, 14b), zugeordnete, insbesondere elektronisch steuerbare und/oder regelbare Formveränderungsmittel (18) gesteuert und/oder geregelt werden.

4. Verfahren gemäß Anspruch 3, **dadurch gekennzeichnet, dass** mittels der steuerbaren und/oder regelbaren Formveränderungsmittel die Form des Reifens (14) verändert wird, indem der Luft- bzw. Gasdruck innerhalb des Reifens (14), insbesondere innerhalb einer in dem Reifen (14) angeordneten Kammer, etwa eines Reifenschlauchs, abhängig von der Fahrsituation erhöht oder erniedrigt wird.

5. Verfahren gemäß einem oder mehreren der vorhergehenden Ansprüche, **dadurch gekennzeichnet, dass** die steuerbaren und/oder regelbaren Formveränderungsmittel auf den Reifen (14) einwirkende Zugmittel (20) aufweisen, mit denen abhängig von der Fahrsituation Zugkräfte bewirkt werden, durch die die Seitenwandungen (14a, 14b) des Reifens (14) aufeinander zu bewegt werden.

6. Verfahren gemäß einem oder mehreren der vorhergehenden Ansprüche, **dadurch gekennzeichnet, dass** die Form des Reifens (14) derart verändert wird, dass die wirksame Reifen-Aufstandsfläche bei ungebremsten oder unbeschleunigten Geradeausfahrten des Fortbewegungsmittels (18) kleiner ist als bei Kurvenfahrten und/oder bei Brems- oder Beschleunigungsvorgängen.

7. Verfahren gemäß einem oder mehreren der vorhergehenden Ansprüche, **dadurch gekennzeichnet, dass** die Form des Reifens (14) abhängig von Brems- und/oder Beschleunigungsvorgängen verändert wird und/oder abhängig von Lenkvorgängen.

8. Verfahren gemäß einem oder mehreren der vorhergehenden Ansprüche, **dadurch gekennzeichnet, dass** die Ist-Fahrsituation mittels geeigneter Sensoren erfasst wird, insbesondere mittels dem Fortbewegungsmittel zugeordneten Beschleunigungssensoren.

9. Fortbewegungsmittel mit zumindest einem abhängig von der Fahrsituation verformbaren Reifen (14) zur Durchführung des Verfahrens gemäß einem oder mehreren der vorhergehenden Ansprüche, **dadurch gekennzeichnet, dass** das Fortbewegungsmittel eine Steuerungs- und/oder Regelungseinrichtung aufweist mittels derer die Form des Reifens (14) vorzugsweise automatisch an die Fahrsituation anpassbar ist.

10. Fortbewegungsmittel gemäß Anspruch 9, **dadurch gekennzeichnet, dass** das Fortbewegungsmittel insbesondere elektronisch steuerbare und/oder regelbare Formveränderungsmittel (18) aufweist, mittels derer die Form des Reifens (14) veränderbar ist, insbesondere auf den Reifen (14) einwirkende Zugmittel (20).

11. Fortbewegungsmittel gemäß Anspruche 10, **dadurch gekennzeichnet, dass** die Zugmittel (20) derart ausgebildet sind, dass abhängig von der Fahrsituation Zugkräfte bewirkbar sind, durch die die Seitenwandungen (14a, 14b) des Reifens (14) aufeinander zu bewegbar sind.

12. Fortbewegungsmittel gemäß zumindest einem der Ansprüche 9 - 11, **dadurch gekennzeichnet, dass** die Zugmittel (20) an den Seitenwandungen (14a, 14b) des Reifens (14) angreifen.

13. Fortbewegungsmittel gemäß zumindest einem der Ansprüche 9-12, **dadurch gekennzeichnet, dass** die Formveränderungsmittel (18) den Reifen zugeordnete Polymerstränge aufweisen, die bevorzugt in die Reifenwandung (14a, 14b) integriert sind.

14. Fortbewegungsmittel gemäß zumindest einem der Ansprüche 9 - 13, **dadurch gekennzeichnet, dass** in dem Reifen (14) auf Induktionswirkung beruhende Energieerzeugungsmittel angeordnet sind zur Versorgung der Formveränderungsmittel (18) und/oder der Steuerungs- und/oder Regelungseinrichtung mit elektrischer Energie.

15. Fortbewegungsmittel gemäß zumindest einem der Ansprüche 9-14, **dadurch gekennzeichnet, dass** die Lauffläche (13) des Reifens (14) mindestens zwei verschiedene Abschnitte aufweist, die jeweils aus Material mit unterschiedlichen Reibungswerten relativ zur Fahrbahn gebildet sind und/oder die unterschiedliche Profilierungen aufweisen.

16. Fortbewegungsmittel gemäß Anspruch 15, **dadurch gekennzeichnet, dass** zumindest ein, bevorzugt mindestens zwei in Querschnittsansicht äußere Abschnitte der Lauffläche aus einem Material mit relativ zur Fahrbahn (16) größerem Reibungswert gebildet sind, und zumindest ein in Querschnittsansicht innerer Laufflächenabschnitt aus Material mit relativ zur Fahrbahn (16) geringerem Reibungswert.
